(19) 

Europäisches
Patentamt

European
Patent Office

Office européen
des brevets

(11)  **EP 3 333 380 B1**

(12)  **EUROPEAN PATENT SPECIFICATION**

(45) Date of publication and mention
of the grant of the patent:
**08.09.2021  Bulletin 2021/36**

(51) Int Cl.:
**F01K 23/10** (2006.01)         **F01K 13/02** (2006.01)
**F01K 7/16** (2006.01)

(21) Application number: **17204203.8**

(22) Date of filing: **28.11.2017**

(54) **SYSTEM AND METHOD FOR FAST STARTUP OF A COMBINED CYCLE POWER PLANT**

SYSTEM UND VERFAHREN ZUM SCHNELLEN HOCHFAHREN EINES KOMBIKRAFTWERKS

SYSTÈME ET PROCÉDÉ DE DÉMARRAGE RAPIDE D'UNE CENTRALE ÉLECTRIQUE À CYCLE COMBINÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.12.2016  KR 20160164621**

(43) Date of publication of application:
**13.06.2018  Bulletin 2018/24**

(73) Proprietor: **Doosan Heavy Industries &
Construction Co., Ltd.
Seongsan-gu
Changwon-si, Gyeongsangnam-do 51711 (KR)**

(72) Inventor: **Cheong, Seung Gyun
17091 Gyeonggi-do (KR)**

(74) Representative: **Ter Meer Steinmeister & Partner
Patentanwälte mbB
Nymphenburger Straße 4
80335 München (DE)**

(56) References cited:
**EP-A2- 2 792 856          JP-A- H09 317 404
JP-A- 2004 116 416       JP-A- 2012 057 585
US-A1- 2014 260 288    US-A1- 2014 373 540**

**Description**

**BACKGROUND**

The present invention relates to a method of and a system for controlling fast start-up of a combined cycle power plant, and more particularly to a method of and a system for controlling fast start-up of a combined cycle power plant, which is capable of shortening start-up time while reducinig or minimizing calculation using model predictive control.

A combined cycle power plant (CCPP) converts thermal energy, which results from fuel combustion, into a rotation force in a gas turbine (GT), and produces electric power by driving a generator using the rotation force. Moreover, the combined cycle power plant recovers high-temperature that is discharged from the gas turbine, generates steam in heat recovery steam generator (HRSG), and generates electric power by driving the rotation force that is obtained in a steam turbine (ST) using the steam.

Generally, an abrupt excess phenomenon occurs when starting up the combined cycle power plant, and this has a considerable influence on the lifetime of a component of the combined cycle power plant and on discharge of harmful substance, such as nitrogen oxide, carbon monoxide, or hydrocarbon.

As an example, temperatures of components of the combined cycle power plant are maintained to a low level when starting up the combined cycle power plant. However, when a temperature of steam that is introduced into the steam turbine is higher than a temperature of a rotor of the steam turbine, this may have an impact on the rotor.

Therefore, generally, in an old-fashioned start-up method, the gas turbine is operated with low load, that is, in such a manner that an amount of electric power that is produced by the gas turbine is small. Then, the steam is generated at a lower temperature, thereby reducing the impact that is exerted on the rotor.

However, when operating the gas turbine with low load, it takes a long time to reach a stabilized state (that is, to reach a normal state after the abrupt excess phenomenon). Accordingly, an amount of harmful substance that is discharged increases and it takes more time to generate the steam in the heat recovery steam generator. That is, the efficiency of the combined cycle power plant decreases.

As an alternative to the old-fashioned start-up method, model predictive control (MPC) is proposed. With the model predictive control, modeling is performed on each of the components of the combined cycle power plant. Based on a result of the modeling, an amount of load with which the combined cycle power plant is started up efficiently while limiting the impact being exerted on the rotor and the like is calculated, and according to this amount of load, the gas turbine is operated. In this manner, an attempt is made to solve the problems with the old-fashioned start-up method in the related art.

However, because the model predictive control requires configuring a model and performing calculation for optimizing each model for each sampling period, a large amount of computing power is needed. As a result, the calculation is impossible with the computing power of a general distributed control system (DCS) in the related art, and thus a problem occurs in that a separate computing system is provided for the model predictive control. In addition, in a specific case, the precision limitation of the model predictive control method causes a problem of reliability. As a result, in a case where a solution to an optimization problem is not found out, a problem occurs in that the operational parameters which have been used in the past are used as they are and thus any control is not performed to solve the problem.

JP 2004 116416 A describes an operation method of a combined cycle power plant. The method includes setting operation parameters of the plant as operation variables, setting an arrival time at which the specified power generation output is reached as an evaluation index, setting an optimization problem for minimizing the evaluation index based on the operation variable and the constraint condition, and solving it before the operation starts to determine an operation parameter which is an operation variable.

JP H09 317404 A relates to a steam turbine starting controller. A thermal stress prediction means predicts thermal stresses to act on the rotor of a steam turbine over a fixed period of time to construct a thermal stress predictive model. An optimal pattern calculation means calculates an optimal shift pattern for the plant state quantum for minimizing the starting time of the turbine. A pattern correction means then corrects the plant state quantum optimal shift pattern to meet specific constraint conditions, and feeds the corrected pattern to a comparator part as a set plant state quantum value. The comparator part compares a measured plant state quantum value with the set plant state quantum value to obtain the deviation, and passes the deviation over to an operating level control means which in turn controls the opening degree of a steam flow control valve.

US 2014/373540 A1 relates to a start control unit for a steam turbine plant. A measured value of a steam temperature fed to a steam turbine, a measured value or an estimated value of a rotor temperature of the steam turbine, and a measured value of a casing temperature of the steam turbine is input, and a steam flow rate is increased so as to increase the steam flow rate fed to the steam turbine when a difference between the steam temperature and the rotor temperature is smaller than a first regulated value and a difference between the rotor temperature and the casing temperature is a second regulated value or larger.

EP 2 792 856 A2 relates to a steam turbine power plant and calculates predictive values and current values of startup constraints of a steam turbine from process variables of plant physical quantities, next calculates in parallel both a first control input variable for a heat medium flow controller based on the predictive values, and a second control input variable for a main steam control valve based on the current values, and while preferentially selecting the first control input variable, if the first control input variable is not calculated, selects the second control input variable instead.

JP 2012 057585 A relates to a start controller in a combined cycle power plant which is equipped with a correcting controller which controls the exhaust temperature of the gas turbine so that the rate of temperature change of the main steam of the steam turbine may come to a specified set temperature, at start of the combined cycle power plant, and corrects and controls the exhaust temperature of the gas turbine so that the temperature of the main steam may go up at the specified set value of rate of temperature change, based on the actually measured temperature of the main steam.

## BRIEF SUMMARY

An object of the present invention is to provide a start-up control method and a system that are capable of starting up a combined cycle power plant in such a manner that it reaches a normal state efficiently and faster while reducing or minimizing an amount of computing power. The object is solved by the features of the independent claims.

In accordance with one aspect of the present invention, a system for controlling start-up of a combined cycle power plant that includes a gas turbine that includes a rotor that rotates using thermal energy which is included in gas that occurs as a result of combusting air and fuel, a heat recovery steam generator (HRSG) that generates steam using high-temperature exhaust gas that is emitted from the gas turbine, a steam turbine that includes a rotor which rotates using steam which occurs in the heat recovery steam generator, and generators that generate electric power using rotation forces, respectively, of the rotor of the gas turbine and the rotor of the steam turbine includes: a sensor that measures operating states of components of the combined cycle power plant which include the gas turbine, heat recovery steam generator, the steam turbine, and the generators; and a controller that controls the start-up of the combined cycle power plant, based on the operating states of the components of the combined cycle power plant, which are acquired from the sensor, in which the controller verifies one or more restrictive conditions that restrict setting of an operational value of an operational parameter for the combined cycle power plant, based on the operating states of the components of the combined cycle power plant, which are acquired from the sensor, and, based on a result of the verification, sets the operational value of the operational parameter.

In the system, the controller may cause the one or more restrictive conditions to include at least one among a thermal stress margin of the rotor of the steam turbine, an upper limit value of a temperature or a pressure of the steam in the heat recovery steam generator, an upper limit value of a temperature of a heater that generates the stream within the heat recovery steam generator, a lower limit value of a water capacity of the heat recovery steam generator, and an upper limit value of a temperature of the rotor of the steam turbine.

In the system, the controller may cause the one or more restrictive conditions to include a thermal stress margin of the rotor of the steam turbine, and may cause the operational parameter to include a rate at which an amount of electric power that is produced by the gas turbine increases.

In the system, the controller may set the rate at which the amount of electric power increases to be a maximum rate of increase, when the thermal stress margin of the rotor of the steam turbine has a first setting value or above, and may set the rate at which the amount of electric power increases to be a value that is obtained by multiplying the maximum rate of increase by a fixed rate (which is greater than 0, but is smaller than 1), when the thermal stress margin of the rotor of the steam turbine has less than the first setting value. Alternatively, the controller may set the rate at which the amount of electric power increases to be a maximum rate of increase, when the thermal stress margin of the rotor of the steam turbine has a second setting or above, the controller sets, and may set the rate at which the amount of electric power increases to be a rate of increase, which is calculated with a proportional-integral controller, based on the thermal stress margin, when the thermal stress margin of the rotor of the steam turbine has less than the second setting value. Alternatively, the controller may set perform modeling of the components of the combined cycle power plant and thus configure model predictive control (MPC), and may predict whether or not the thermal stress margin is sufficient, based on the operating states of the components of the combined cycle power plant, which are obtained from the sensor, and on the model predictive control. Furthermore, the controller may set the rate at which the amount of electric power increases to be a maximum rate of increase, when as a result of the prediction, it is verified that the thermal stress margin is sufficient, and may set the rate at which the amount of electric power increases to have a value that is obtained by multiplying the maximum rate of increase by a fixed rate (which is greater than 0, but is smaller than 1), when as a result of the prediction, it is verified that the thermal stress margin is not sufficient.

In the system, although with the model predictive control, the amount of electric power that is produced is caused to increase at the maximum rate of increase, based on a model, the controller may determine that the thermal stress margin is sufficient, in a case where it is predicted that the thermal stress margin is maintained to a third setting value or above, and may determine that the thermal stress margin is not sufficient, in a case where it is predicted that the thermal stress margin has less than the third setting value.

According to another aspect of the present invention, there is provided a method of controlling start-up of a combined cycle power plant that includes a gas turbine, a heat recovery steam generator, a steam turbine, and generators (hereinafter referred to as components), the method including: acquiring operating states of the components of the combined cycle power plant, using a sensor; verifying one or more restrictive conditions that restrict setting of an operational value of an operational parameter for the combined cycle power plant, based on the acquired operating states of the components of the combined cycle power plant; and setting the operational value of the operational parameter based on a result of the verification.

In the method, the verifying of the one or more restrictive conditions may include performing verification, with at least one, among a thermal stress margin of a rotor of the steam turbine, an upper limit value of a temperature or a pressure of steam in the heat recovery steam generator, an upper limit value of the temperature of a heater for generating the stream within the heat recovery steam generator, a lower limit value of a water capacity of the heat recovery steam generator, and an upper limit value of a temperature of the rotor of the steam turbine, serving as a restrictive condition.

In the method, the verifying of the one or more restrictive conditions may include performing verification with a thermal stress margin of the rotor of the steam turbine serving as a restrictive condition, and the setting of the operational value of the operational parameter may include setting the operational value with a rate at which an amount of electric power that is produced by the gas turbine increases being used as the operational parameter.

In the method, the verifying of the one or more restrictive conditions may include determining that the thermal stress margin of the rotor of the steam turbine is normal, when the thermal stress margin of the rotor of the steam turbine has a first setting value or above and determining that the thermal stress margin of the rotor of the steam turbine fails, when the thermal stress margin of the rotor of the steam turbine has less than the first setting value, and the setting of the operational value of the operational parameter may include setting a rate at which an amount of eclectic power increases to be a maximum rate of increase, when it is determined that the thermal stress margin is normal, in the verifying of the one or more restrictive conditions, and setting the rate at which the amount of eclectic power increases to have a value that is obtained by multiplying the maximum rate of increase by a fixed rate (which is greater than 0, but is smaller than 1), when it is determined that the thermal stress margin fails, in the verifying of the one or more restrictive conditions.

In the method, the verifying of the one or more restrictive conditions may include determining that the thermal stress margin of the rotor of the steam turbine is normal, when the thermal stress margin of the rotor of the steam turbine has a second setting or above, and determining that the thermal stress margin of the rotor of the steam turbine fails, when the thermal stress margin of the rotor of the steam turbine has less than the second setting value, and the setting of the operational value of the operational parameter may include setting a rate at which an amount of eclectic power increases to be a maximum rate of increase, when it is determined that the thermal stress margin is normal, in the verifying of the one or more restrictive conditions, and setting the rate at which the amount of eclectic power increases to be a rate of increase, which is calculated with a proportional-integral controller, based on the thermal stress margin, when it is determined that the thermal stress margin fails, in the verifying of the one or more restrictive conditions.

The method of controlling start-up of a combined cycle power plant may further include performing modeling of the components of the combined cycle power plant and configuring model predictive control (MPC), in which the verifying of the one or more restrictive conditions may include verifying whether or not the thermal stress margin is sufficient, based on the operating states of the components of the combined cycle power plant, which are obtained from the sensor, and on the model predictive control, and in which the setting of the operational value of the operational parameter includes setting a rate at which an amount of eclectic power increases to be a maximum rate of increase, when it is verified that the thermal stress margin is sufficient, in the verifying of the one or more restrictive conditions, and setting the rate at which the amount of eclectic power increases to have a value that is obtained by multiplying the maximum rate of increase by a fixed rate (which is greater than 0, but is smaller than 1), when it is verified that the thermal stress margin is not sufficient, in the verifying of the one or more restrictive conditions.

In the method, the verifying of whether or not the thermal stress margin is sufficient may include determining that the thermal stress margin is sufficient, in a case where it is predicted that the thermal stress margin is maintained to a third setting value or above, and determining that the thermal stress margin is not sufficient, in a case where it is predicted that the thermal stress margin has less than the third setting value, although with the model predictive control, the amount of electric power that is produced is caused to increase at the maximum rate of increase, based on a model.

According to the present invention, start-up time of a combined cycle power plant may be shortened and thus the combined cycle power plant can be operated in a more efficient manner. Additionally, an effect of reducing an amount of harmful substance that is discharged can be achieved.

## BRIEF DESCRIPTION OF THE DRAWINGS

The above and other objects, features and other advantages of the present invention will be more clearly understood from the following detailed description taken in conjunction with the accompanying drawings, in which:

FIG. 1 is a block diagram of a system for fast start-up of a combined cycle power plant according to an embodiment in of the present invention;

FIG. 2 is a diagram illustrating a method of controlling the combined cycle power plant for the fast start-up according to an embodiment of the present invention;

FIG. 3 is a flowchart illustrating an example of setting a rate at which an amount of electric power increases, according to an embodiment of the present invention;

FIG. 4A is a diagram illustrating an exemplary amount of electric power that is produced with a method which is illustrated in FIG. 3;

FIG. 4B is a diagram illustrating an exemplary thermal stress margin associated with the method which is illustrated in FIG. 3;

FIG. 5 is a flowchart illustrating an example of setting the rate at which the amount of electric power that is generated increases, according to an embodiment of the present invention;

FIG. 6 is a flowchart illustrating an example in which, the rate at which the amount of electric power increases is set, according to an embodiment of the present invention;

FIG. 7 is a flowchart illustrating an example in which the rate at which the amount of electric power that is produced increases is set, according to an embodiment of the present invention;

FIG. 8A is a diagram illustrating an exemplary amount of electric power that is produced with a method which is illustrated in FIG. 7; and

FIG. 8B is a diagram illustrating an exemplary thermal stress margin associated with the method which is illustrated in FIG. 7.

## DETAILED DESCRIPTION

Description will be provided in detail below with reference to the accompanying drawings. However, the present invention may be implemented in various different forms, and is not limited to embodiments that will be described here.

In the following description, when a certain part is connected to a different part, this includes not only a case where a direct electrical connection is made between them, but also a case where an electrical connection is made between them with an element in between. The terms first, second and third are used for describing various parts, components, regions, layers, and/or sections, but are not limited to these.

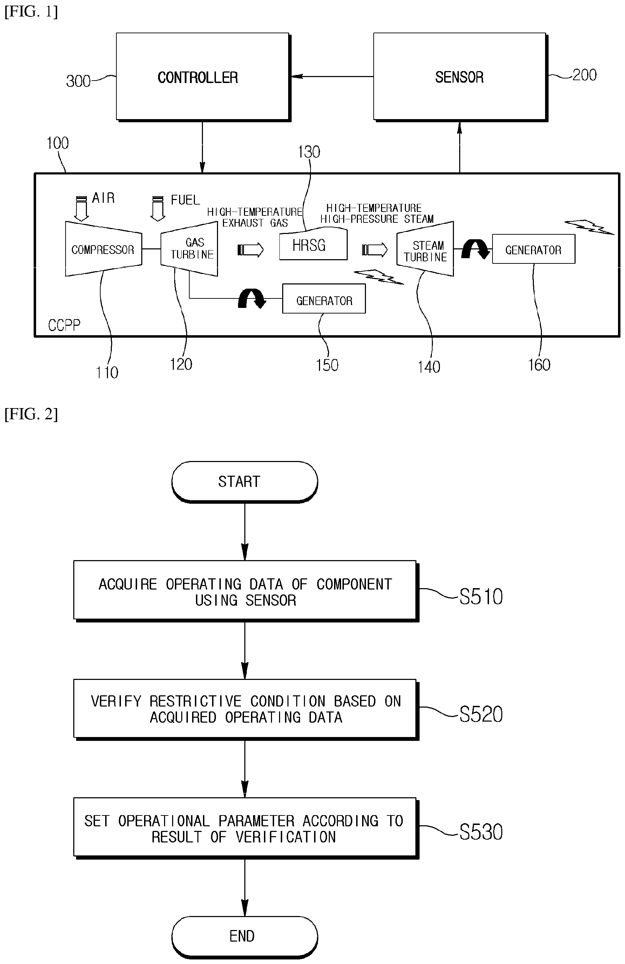

FIG. 1 is a block diagram of a system for fast start-up of a combined cycle power plant according to an embodiment of the present invention.

With reference to FIG. 1, a system according to an embodiment of the present invention includes a combined cycle power plant 100, a sensor 200, and a controller 300.

The combined cycle power plant 100 includes a compressor 110, a gas turbine 120, a heat recovery steam generator (HRSG) 130, a steam turbine 140, and generators 150 and 160. The compressor 110 compresses air and transfers the compressed air to the gas turbine 120. The gas turbine 120 includes a rotor that rotates using thermal energy which is included in gas that occurs as a result of combusting air and fuel. The heat recovery steam generator 130 generates steam using high-temperature exhaust gas that is emitted from the gas turbine 120. The steam turbine 140 includes a rotor that rotates using steam which occurs in the heat recovery steam generator 130. The generators 150 and 160 generate electric power using rotation forces, respectively, of the rotor of the gas turbine 120 and the rotor of the steam turbine 140. The two generators are illustrated separately in FIG. 1, but one generator may generate the electric power using the rotation forces that occur in the gas turbine 120 and the steam turbine 140.

The combined cycle power plant 100 includes multiple valves that adjust the passage of fluid or air. Examples of the valves include a valve that controls air which is introduced in the compressor 110, a valve that controls an amount of fuel that is introduced into the gas turbine 120, a valve that controls the passage of steam within the heat recovery steam generator 130, a valve that controls the passage of steam that flows from the heat recovery steam generator 130 to the steams turbine 140, and the like. These valves may be controlled by the controller 300 that will be described below.

The sensor 200 is a device that measures operating states of components of the combined cycle power plant 100. The sensors 200 include a thermometer, a barometer, a flowmeter, and the like. Examples of the operating states of the components include pieces of information on a temperature of exhaust gas that is discharged from the gas turbine 120 to the heat recovery a steam generator 130, a temperature or a pressure of steam within the heat recovery a steam generator 130, a temperature of a heater that heats water within the heat recovery a steam generator 130, a temperature of and/or a stress on the rotor of the steam turbine 140, an output electric power of each of the generators 150 and 160, and the like. The sensor transfers the measured operating state of the component to the controller 300.

The controller 300 controls parameters for managing the combined cycle power plant 100, based on pieces of information on the operating states of the components of the combined cycle power plant 100 obtained by the sensor 200. These operational parameters include ones for controlling the valves that will be described above. As an example, the extent to which the valve, which is controlled by the controller 300 to control the amount of fuel that is introduced, is opened is selected as one operational parameter.

The controller 300 performs control in such a manner that the combined cycle power plant 100 is operated safely and optimally. Specifically, regarding a method of starting up the combined cycle power plant 100, there is a need to minimize the starting time.

In an old-fashioned method, the safety comes first, and thus control is performed in such a manner that the gas turbine operates with a small load being placed on it, in order to limit an impact that is to be applied to the rotor of the steam turbine. More specifically, the controller adjusts the amount of fuel that is introduced into the gas turbine, to maintain a temperature of the exhaust gas that is discharged from the gas turbine to a fixed value or blow. Thus, an amount of steam that is generated in the heat recovery steam generator is also limited, and accordingly, the start-up of the combined cycle power plant i requires a long start-up time.

According to another embodiment, a method that is based on a model predictive control (MPC) is used. In the method that is based on the model predictive control, a model for the gas turbine, the heat recovery steam generator, and the steam turbine is configured, and, based on this configuration, operational parameters are controlled. At this point, the model for the gas turbine, the heat recovery steam generator, and the steam turbine is a dynamic model that is based on a differential equation. In the method that is based on the model predictive control, data relating to the operating state of the combined cycle power plant is received from the sensor and, based on the received data and the model described above, future states of the gas turbine, the heat recovery steam generator, and a steam turbine are predicted. According to the embodiment, based on the received data relating to the operating state and the model, the temperature of the steam that is introduced into the rotor of the steam turbine is predicted. To do this, in the method that is based on the model predictive control, a control sequence is finished, data relating to the operating state of the combined cycle power plant is then received newly, the model is optimized in real time, and thus operational parameters in the next state are determined. In addition, in the method that is based on the model predictive control, parameters (for example, a coefficient in a differential equation) may be adjusted based on the data relating to the operating state of the combined cycle power plant, which is collected to increase the precision of the prediction of the future state. That is, in the method that is based on the model predictive control, values of operational parameters, at which the combined cycle power plant is operated optimally while a restrictive condition (for example, a condition that steam should be supplied at such a temperature that no impact is applied to the rotor of the steam) that applies to the model is satisfied, have to be calculated. That is, in the method that is based on the mode predictive control, calculation for determining whether or not the restrictive condition is satisfied, and calculation for obtaining a value of the optimized operational parameter. In addition, in a case where a parameter for the model itself is changed, additional calculation for optimizing this parameter has to be performed.

These complicated calculations are absolutely impossible with DCS in the related art.

According to the present invention, improving an operation of starting up the combined cycle power plant 100 while reducing the calculation that uses the model predictive control is provided.

FIG. 2 is a diagram illustrating a method of controlling the combined cycle power plant for the fast start-up according to an embodiment of the present invention.

The method that is illustrated in FIG. 2 may be performed by the controller 300 with every sampling period.

With reference to FIG. 2, the controller 300 acquires the data relating to the operating state of the component of the combined cycle power plant 100, which may be every sampling period, using the sensor (S510). At this point, the data relating the operating state may include the temperature of the exhaust gas that is discharged from the gas turbine 120 to the heat recovery steam generator 130, the temperature and the pressure of the steam in the heat recovery steam generator 130, the temperature of the heater that heats water within the heat recovery steam generator 130, and the temperature of and/or the stress on the rotor of the steam turbine 140, the output electric power of each of the generators 150 and 160, and the like.

Then, the restrictive condition for controlling parameters based on the acquired data relating to the operating state is verified (S520).

As an example of the restrictive condition, a thermal stress margin of the rotor is used. When heated, an object increases in volume, but contrarily, when cooled, decreases in volume. However, when an object, such as the rotor of the steam turbine 140, is suppressed from expanding and contracting, an internal force resistant to this suppression occurs. This internal force is referred to a thermal stress. An amount of stress increases in proportion to a thermal expansion coefficient that is a physical property specific to the heated object and a temperature. If the load on the gas turbine 120 is caused to increase abruptly when starting up the combined cycle power plant 100, the temperature of the exhaust gas abruptly increases. As a result, when the temperature increases to be out of a range of thermal stress, the rotor of the steam turbine may be damaged. Therefore, the thermal margin that is determined by the temperature of the stream turbine 140 and the temperature of the steam that is introduced into the rotor may be set as a restrictive condition. That is, the thermal stress margin of the rotor is set as a restrictive condition, and it is verified with every sampling period whether or not the thermal stress margin of the rotor is sufficient.

A result of the verification is represented by PASS or FAIL. PASS means that the restrictive condition that is set is satisfied and FAIL means that the restrictive condition is not satisfied. In the case of the thermal stress margin described above, when the thermal stress margin is sufficient, this is represented by PASS and when the thermal stress margin is not sufficient, this is represented by FAIL.

At this point, a specific value is set in order to determine whether or not the thermal stress margin is sufficient. Then, in a case where the thermal stress margin has the specific value or above, it is determined that the thermal stress margin is sufficient and in a case where the thermal stress margin has less than the specific value, it is determined that the thermal stress margin is not sufficient. The specific value at this time is set and adjusted based on data over a period of time.

With another method, the determination is made based on the model predictive control described above. That is, although modeling is performed on components of the combined cycle power plant and based on the resulting model, the load is caused to increase at a high or maximum rate of increase, in a case where it is predicted that the thermal stress margin is maintained to a fixed level or above, it is determined that the thermal stress margin is sufficient. Furthermore, in a case where it is predicted that the thermal stress margin is at the fixed level or falls below the fixed level, it is determined that the thermal stress margin is not sufficient.

In the example described above, the description is provided with the thermal stress margin as the restrictive condition, but other conditions may be used as the restrictive conditions. As several examples of the restrictive conditions, an upper limit value of the temperature or the pressure of the steam in the heat recovery steam generator 130, an upper limit value of the temperature of the heater that heats water within the heat recovery steam generator 130, a lower limit value of a water capacity of the heat recovery steam generator 130, an upper limit value of the temperature of the rotor of the steam turbine 140, and the like may be used.

When the verification of the restrictive condition using the technique described is finished, operational parameters are set according to a result of the verification (S530). The operational parameter that is set at this time may be a rate at which an amount of electric power that is produced by the gas turbine 120 increases. That is, the operational parameter may be an amount of load on the gas turbine 120. This amount of load is in proportion to the amount of fuel that is introduced into the gas turbine 120, and thus the controller 300 adjusts the amount of load, that is, the rate at which the amount of electric power that is produced increases, by controlling the valve that controls the amount of fuel.

As an example, in a case where the result of the verification is PASS, the operational parameter is set in such a manner that the rate at which the amount of electric power that is produced increases is high or maximized. That is, the operational parameter may be set as in Equation 1 that follows.

$$u(t) = \min\{u(t-1) + rmax \times Ts, umax\} \quad \text{Equation 1}$$

where $u(t)$ is an operational value of the operational parameter that is determined with a current sampling period, $u(t-1)$ is an operational value of the operational parameter that is determined with a previous sampling period, $rmax$ is a maximum rate of increase, and $umax$ is a maximum value that the operational parameter can take.

In a case where the result of the verification is FAIL, the rate at which the amount of electric power that is produced increases is set to a specific value that is smaller than the high or maximum rate of increase. A specific value at this time is a value at which the thermal stress margin is maintained to a fixed value that is almost closer to 0. That is, when the high or maximum rate at which the amount of electric power that is produced increases is about 1, a specific value that is smaller than the high or maximum rate may be determined to be 0.2, 0.4, 0.7 and so forth. That is, the operational parameter may be set as in Equation 2 that follows.

$$u(t) = \min\{u(t-1) + \alpha \times rmax \times Ts, umax\}, \quad \text{Equation 2.}$$

where $u(t)$ is an operational value of the operational parameter that is determined with a current sampling period, $u(t-1)$ is an operational value of the operational parameter that is determined with a previous sampling period, $\alpha$ is a rate of decrease, that is, a rate for decreasing the rate at which the amount of electric power that is produced increases, of which a value ranges from 0 to 1, $rmax$ is a maximum rate of increase, $TGs$ is a sampling period, and $umax$ is a maximum value that the operational parameter can have.

With reference to Equation 2, in a case where the result of the verification is FAIL, that is, in a case where the thermal stress margin is not sufficient, the impact that is exerted on the rotor is prevented by decreasing the rate at which the amount of electric power that is produced increases.

In a case where the result of the verification is FAIL, a proportional-integral controller may be used as another method of determining the rate at which the amount of electric power that is produced increases. That is, the operational value of the operational parameter may be determined using Equation 3 that follows.

$$u(t) = u(t - 1) + \max\{0, \min\{K(y(t - 1) - \beta), rmax\} \times Ts\} \quad \text{Equation 3}$$

where u(t) is an operational value of the operational parameter that is determined with a current sampling, u(t - 1) is an operational value of the operational parameter that is determined with a previous sampling period, y(t - 1) is a thermal stress margin that is acquired with the previous sampling period, constants K and β are a gain a setting point, respectively, of the proportional-integral controller, rmax is a maximum rate of increase at which the operational parameter increases, Ts is a sampling, and umax is a maximum value that the operational parameter can take.

The constants K and β that provide characteristics of the proportional-integral controller at this time are adjusted for the particular machine. At this time, a technique of reducing or preventing windup of the proportional-integral controller is added. That is, in a case where a control value that is calculated with the proportional-integral controller is greater than a value that is actually set to be an operational parameter and thus saturation with the operational parameters takes place, integrated values are accumulated into a great value. Thus, when an output value is actually approached, a great control value continues to be output, instead of the control value being decreased. Because of this, in some cases, it takes a long time for the system to reach the setting value. This phenomenon is referred to the windup. In order to reduce or prevent the windup, a suitable technique of reducing or preventing the windup is used, thereby complementing the proportional-integral controller. According to the present invention, with reference to Equation 3, a maximum value of the control value that the proportional-integral controller can take is limited to rmax, thereby reducing or preventing the windup.

Several embodiments relating to a control method that is performed by the controller 300 when starting up the combined cycle power plant 100 based on the description above will now be discussed in more detail.

In the following embodiments, the thermal stress margin is set to be the restrictive condition, the operational parameter is used to control the rate at which the amount of electric power that is produced increases. However, it will be appreciated that a method which is proposed according to the present embodiment is applied in a similar manner under various restrictive conditions to various operational parameters that include a rate of increase in the temperature of the exhaust gas, an amount of steam that is generated in the heat recovery steam generator 130, and the like.

First Embodiment

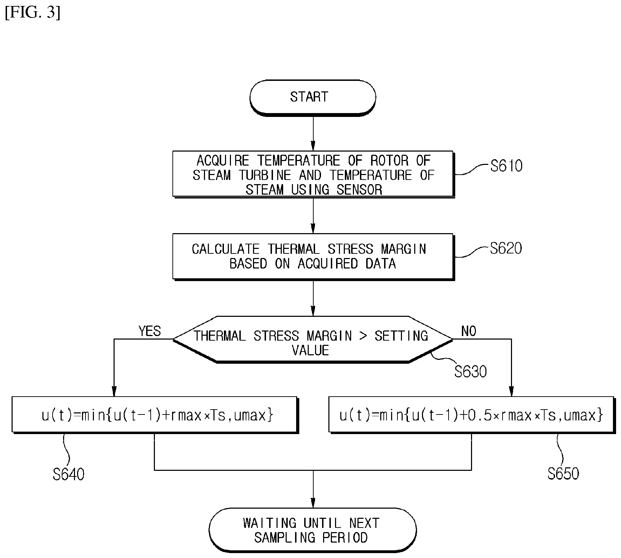

FIG. 3 is a flowchart illustrating an example in which, when the thermal stress margin has a setting value or above, the rate at which the amount of electric power increases is set to be a high or maximum and in which, when the thermal stress margin has less than the setting value, that rate is set to be half of the high or maximum rate of increase, according to an embodiment of the present invention, according to an embodiment of the present invention.

With reference to FIG. 3, the controller 300 acquires the temperature of the rotor of the steam turbine and the temperature of the steam that is introduced into the steam turbine (S610), using the sensor, and based on the acquired data, calculates the thermal stress margin (S620). The controller 300 compares the thermal stress margin with a setting value (S630), and when the thermal stress margin is greater than the setting value, causes the amount (u(t)) of electric power that is produced to increase at the high or maximum rate (rmax) of increase (S640). When the thermal stress margin is smaller than the setting value, the controller 300 causes the amount (u(t)) of electric power that is produced to increase at half of the high or maximum rate (rmax) of increase (S650). According to the present embodiment, in a case where the thermal stress margin is smaller than the setting value, the amount of electric power that is produced is set to be caused to increase at half of the high or maximum rate (rmax) of increase. However, the rate of increase at which the amount of electric power that is produced is caused to increase may be set to a value that is selected for the particular machine.

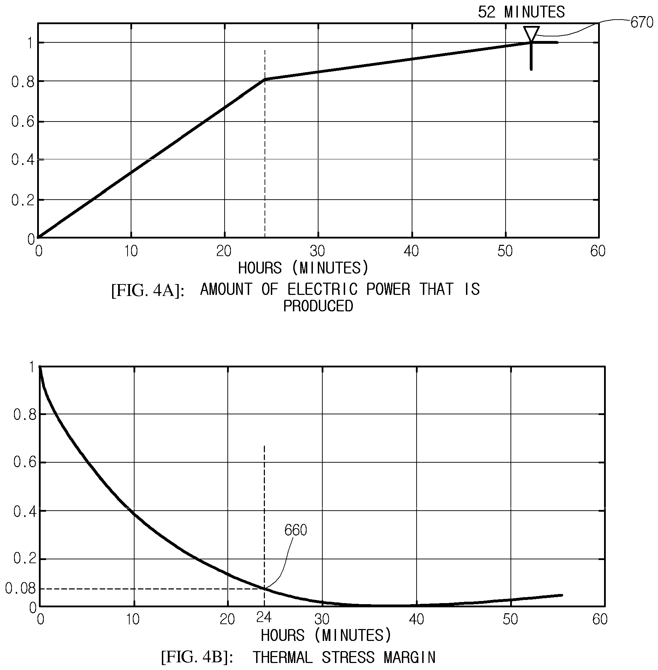

FIG. 4A is a diagram illustrating the amount of electric power that is produced with the method which is illustrated in FIG. 3, and the thermal stress margin is illustrated in FIG. 4B.

In FIGs. 4, the X axis represents time, and the Y axis represents a relative amount of electric power that results when the high or maximum amount of electric power that is produced is set to 1 and a relative thermal stress margin that results when a high or maximum thermal stress margin is set to 1.

With reference to FIGs. 4, when the thermal stress margin is greater than the setting value (which is 8 percent of the high or maximum thermal stress margin in FIG. 4), the amount of electric power that is produced is caused to increase. When the thermal stress margin is smaller than the setting value approximately 24 minutes after starting up the combined cycle power plant 100 (660), the amount of electric power that is produced is caused to increase at a rate of increase that is lower than the high or maximum rate of increase. When the high or maximum amount of electric power that can be produced is reached, it can be said that a high or maximum capacity state is attained. From an example in FIG. 2, it is understood that the high or maximum capacity state is attained 52 minutes after starting up the combined cycle power plant 100.

## Second Embodiment

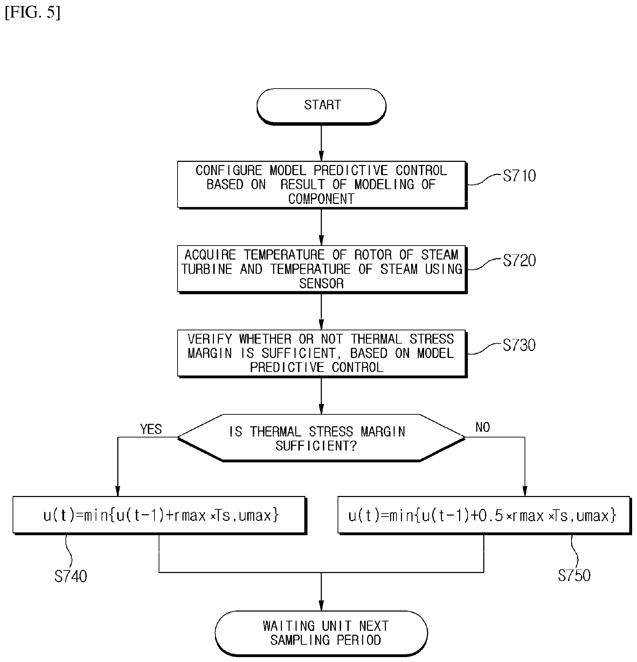

FIG. 5 is a flowchart illustrating an example in which it is verified whether or not the thermal stress margin is sufficient, based on the model predictive control, and based on a result of the verification, the rate at which the amount of electric power that is generated increases is set, according to an embodiment of the present invention.

With reference to FIG. 5, the controller 300 performs the modeling of the components, and based on a result of the modeling, configures the model predictive control (S710). The controller 300 acquires the temperature of the rotor of the steam turbine and the temperature of the steam that is introduced into the steam turbine, using the sensor (S720), and based on the acquired data and the model predictive control, verifies whether or not the thermal stress margin is sufficient (S73). At this point, although the load is caused to increase abruptly based on the model, in a case where, with the model predictive control, it is predicted that the thermal stress margin is maintained to a fixed level or above, the controller 300 determines that the thermal stress margin is sufficient. Furthermore, in a case where, with the model predictive control, it is predicted that the thermal stress margin is at a fixed level or falls below the fixed level, the controller 300 determines that the thermal stress margin is not sufficient. When it is verified that the thermal stress margin is sufficient, the controller 300 causes the amount ($u(t)$) of electric power that is produced to increase at the high or maximum rate (rmax) of increase (S740), and when it is verified that the thermal stress margin is not sufficient, the controller 300 causes the amount ($u(t)$) of electric power that is produced to increase at half of the high or maximum rate (rmax) of increase. According to the present embodiment, in a case where the thermal stress margin is small, the amount of electric power that is produced is caused to increase to half of the high or maximum rate (rmax) of increase. However, the rate of increase at which the amount of electric power is caused to increase may be set to a value that is selected for a particular machine.

## Third Embodiment

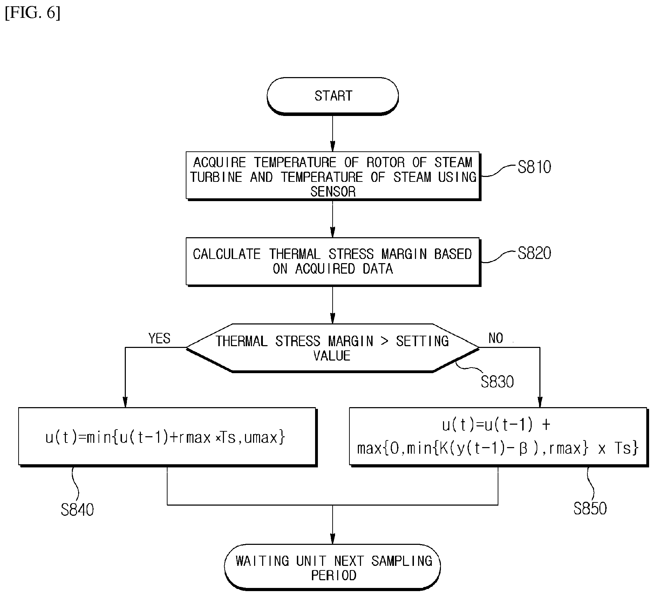

FIG. 6 is a flowchart illustrating an example in which, when the thermal stress margin has a setting value or above, the rate at which the amount of electric power increases is set to be high or maximum and in which, when the thermal stress margin has less than the setting value, the rate at which the amount of electric power increases is set based on the thermal stress margin, using the proportional-integral controller, according to an embodiment of the present invention.

With reference to FIG. 6, the controller 300 acquires the temperature of the rotor of the steam turbine and the temperature of the steam that is introduced into the steam turbine, using the sensor (S810), and based on the acquired data, calculates the thermal stress margin (S820). The controller 300 compares the thermal stress margin with a setting value (S830), and when the thermal stress margin is greater than the setting value, causes the amount ($u(t)$) of electric power that is produced to increase at the high or maximum rate (rmax) of increase (S840). When the thermal stress margin is smaller than the setting value, the controller 300 causes the amount ($u(t)$) of electric power that is produced to increase based on the thermal stress margin, using the proportional-integral controller (S850). The constants K and $\beta$ that provide the characteristics of the proportional-integral controller at this time are selected for a particular machine.

## Fourth Embodiment

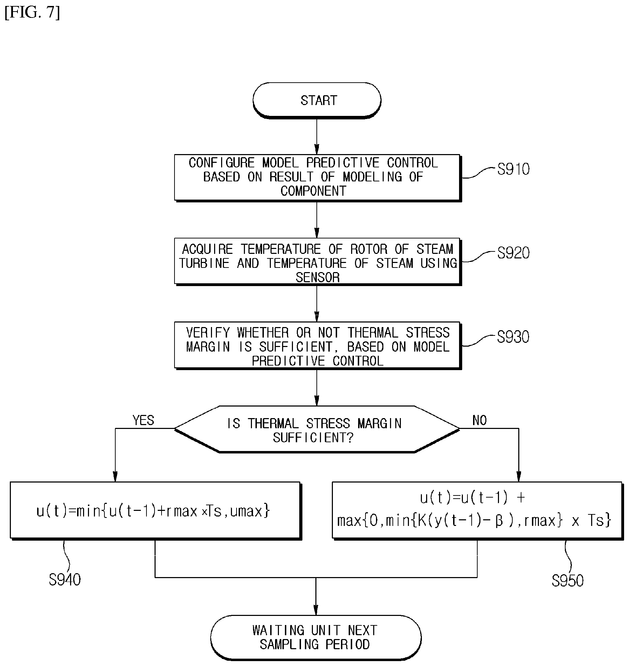

FIG. 7 is a flowchart illustrating an example in which it is verified whether or not the thermal stress margin is sufficient, based on the model predictive control and, based on a result of the verification, the rate at which the amount of electric power that is produced increases is set, but in which, in a case where the thermal stress margin is not sufficient, the rate at which the amount of electric power that is produced increases is calculated based on the thermal stress margin, using the proportional-integral controller, according to an embodiment of the present invention.

With reference to FIG. 7, the controller 300 performs the modeling of the components and based on a result of the modeling, configures the model predictive control (S910). The controller 300 acquires the temperature of the rotor of the steam turbine and the temperature of the steam that is introduced into the steam turbine, using the sensor (S920, and based on the acquired data and the model predictive control, verifies whether or not the thermal stress margin is sufficient (S930). When it is verified that the thermal stress margin is sufficient, the controller 300 causes the amount ($u(t)$) of electric power that is produced to increase at the high or maximum rate (rmax) of increase (S940). When it verified that the thermal stress margin is not sufficient, the controller causes the amount ($u(t)$) of electric power that is produced to increase, based on the thermal margin, using the proportional-integral controller (S950). The constants K and $\beta$ that provide the characteristics of the proportional-integral controller at this time are selected for a particular machine.

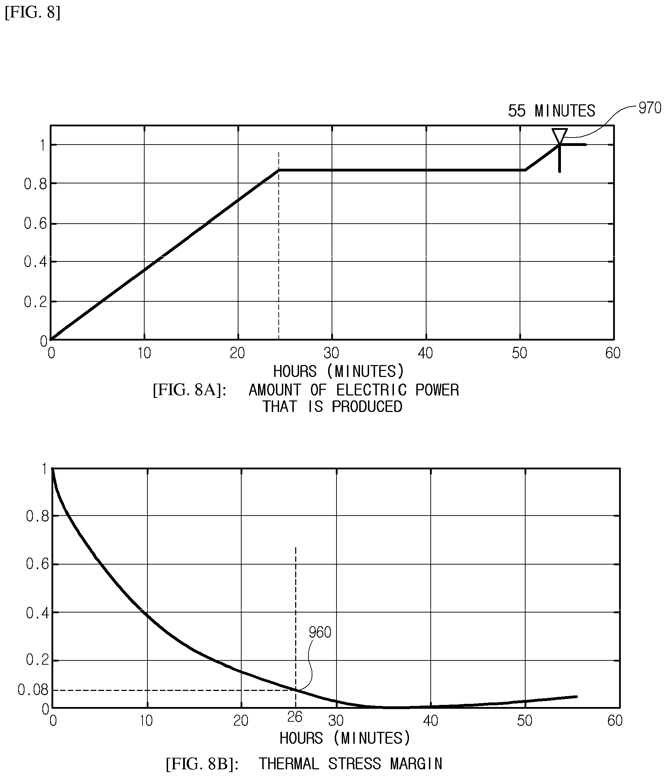

FIG. 8A is a diagram illustrating the amount of electric power that is produced with the method which is illustrated in FIG. 7, and FIG. 8B illustrates the thermal stress margin.

In FIGs. 8, the X axis represents time, and the Y axis represents a relative amount of electric power that results when the high or maximum amount of electric power that is produced is set to 1 and a relative thermal stress margin that results when a high or maximum thermal stress margin is set to 1.

With reference with FIG. 8, when it is determined that the thermal stress margin which is predicted with the model predictive control is sufficient (it is determined in FIG. 8 that, when greater than 8 percent of the high or maximum thermal stress margin, the predicted thermal stress margin is sufficient), the amount of electric power that is produced is caused to increase at the high or maximum rate of increase. Furthermore, when it is determined that the thermal stress margin which is predicted with the model predictive control approximately 26 minutes (960) after starting up the combined cycle power plant 100, the amount of electric power that is produced is caused to increase at a rate of increase that is calculated with the proportional-integral controller. When the high or maximum amount of electric power that is produced is reached, it can be said that the high or maximum capacity state is attained. From an example in FIG. 8, it is understood that the high or maximum capacity state is attained 55 minutes (970) after starting up the combined cycle power plant 100.

With reference to FIG. 8, it is illustrated that, after it is determined that the thermal stress margin is not sufficient, the rate of increase that is calculated with the proportional-integral controller stays 0 for some time. This is due to the constant $\beta$ that is retained by the proportional-integral controller. That is, with $\beta$, the rate of increase that is calculated with the proportional-integral controller is smaller than 0 for a fixed time. In other words, a length of time for which the rate of increase stays 0 is determined according to a value of $\beta$.

With the control method that is performed when starting up the integrated thermal power generation plant, the efficiency is increased in comparison with the old-fashioned method, and further higher efficiency may be achieved while an amount of calculation is remarkably reduced, in comparison with a model predictive control scheme that has recently been proposed.

### Claims

1. A system for controlling start-up of a combined cycle power plant (100) that includes a gas turbine (120) and a heat recovery steam generator (130), the system comprising;

   one or more sensors (200) configured to respectively measure an operating state of a component of the combined cycle power plant (100); and
   a controller (300) configured to control the start-up of the combined cycle power plant (100) based on the operating state of the component of the combined cycle power plant (100) respectively measured by the one or more sensors (200), wherein
   the controller (300) is configured to determine one or more restrictive conditions that restrict setting of an operational value of an operational parameter of the combined cycle power plant (100) based on the operating state of the component of the combined cycle power plant (100) respectively measured by the one or more sensors (200), and
   the controller (300) is configured to set the operational value of the operational parameter based on a result of the determination,
   wherein the one or more restrictive conditions include a thermal stress margin of a rotor of a steam turbine of the heat recovery steam generator (130) and the operational parameter includes a rate at which an amount of electric power that is produced by the gas turbine (120) increases,
   the controller (300) is configured to perform modeling of components of the combined cycle power plant (100) and predict whether or not the thermal stress margin is a first value or above, and
   wherein the controller (300) is configured to set the rate at which the amount of electric power increases to be a first rate of increase when the thermal stress margin of the rotor of the steam turbine is the first value or above.

2. The system according to claim 1, wherein
   the controller (300) is configured to set the rate at which the amount of electric power increases to have a value that is less than the first rate when, as a result of the prediction, the controller (300) determines that the thermal stress margin is less than the first value.

3. The system according to claim 1, wherein
   the controller (300) is configured to set the rate at which the amount of electric power increases to be a rate of increase calculated with a proportional-integral controller based on the thermal stress margin when the controller (300) determined that the thermal stress margin is less than the first value.

4. A method of controlling start-up of a combined cycle power plant (100) that includes a gas turbine (120), a heat recovery steam generator (130), a steam turbine, and generators, the method comprising:

determining (S510) an operating state of one or more components of the combined cycle power plant (100) using sensors (200);

determining (S520) one or more restrictive conditions that restrict setting of an operational value of an operational parameter of the combined cycle power plant (100) based on the determined operating states of the components of the combined cycle power plant (100); and

setting (S530) the operational value of the operational parameter based on a result of the determining the one or more restrictive conditions,

wherein the one or more restrictive conditions include a thermal stress margin of a rotor of a steam turbine of the heat recovery steam generator (130) and the operational parameter includes a rate at which an amount of electric power that is produced by the gas turbine (120) increases,

wherein the method further comprises:

performing modeling of the components of the combined cycle power plant (100),

wherein the determining the one or more restrictive conditions includes determining whether or not the thermal stress margin is a first value or above, and

wherein the setting of the operational value of the operational parameter includes setting a rate at which an amount of electric power increases to be a first rate of increase when it is determined that the thermal stress margin is the first value or above.

5.  The method of controlling start-up of a combined cycle power plant according to claim 4, wherein:
the setting of the operational value of the operational parameter further includes setting the rate at which the amount of electric power increases to be less than the first value when the thermal stress margin is less than the first value.

6.  The method of controlling start-up of a combined cycle power plant according to claim 4, wherein:
the setting of the operational value of the operational parameter further includes setting the rate at which the amount of electric power increases to be a rate of increase calculated with a proportional-integral controller based on the thermal stress margin when the thermal stress margin is less than the first value.


**Patentansprüche**

1.  System zum Steuern des Anfahrens eines Kombikraftwerks (100), das eine Gasturbine (120) und einen Abhitzedampferzeuger (130) enthält, wobei das System Folgendes umfasst:

einen oder mehrere Sensoren (200), die konfiguriert sind, jeweils einen Betriebszustand einer Komponente des Kombikraftwerks (100) zu messen, und

eine Steuereinheit (300), die konfiguriert ist, das Anfahren des Kombikraftwerks (100) auf der Grundlage des Betriebszustands der Komponente des Kombikraftwerks (100), der jeweils durch den einen oder die mehreren Sensoren (200) gemessen wird, zu steuern, wobei

die Steuereinheit (300) konfiguriert ist, eine oder mehrere einschränkende Bedingungen zu bestimmen, die das Einstellen eines Betriebswerts eines Betriebsparameters des Kombikraftwerks (100) auf der Grundlage des Betriebszustands der Komponente des Kombikraftwerks (100), der jeweils durch den einen oder die mehreren Sensoren (200) gemessen wird, einschränken, und

die Steuereinheit (300) konfiguriert ist, den Betriebswert des Betriebsparameters auf der Grundlage eines Ergebnisses der Bestimmung einzustellen,

wobei die eine oder die mehreren einschränkenden Bedingungen einen Randwert für die thermische Belastung eines Rotors einer Dampfturbine des Abhitzedampferzeugers (130) enthalten und der Betriebsparameter eine Rate umfasst, mit der eine Menge elektrischer Leistung, die durch die Gasturbine (120) produziert wird, zunimmt,

die Steuereinheit (300) konfiguriert ist, eine Modellierung von Komponenten des Kombikraftwerks (100) durchzuführen und vorherzusagen, ob der Randwert für die thermische Belastung ein erster Wert ist oder darüber liegt oder nicht, und

wobei die Steuereinheit (300) konfiguriert ist, die Rate, mit der die Menge elektrischer Leistung zunimmt, auf eine erste Zunahmerate einzustellen, wenn der Randwert für die thermische Belastung des Rotors der Dampfturbine der erste Wert ist oder darüber liegt.

2.  System nach Anspruch 1, wobei
die Steuereinheit (300) konfiguriert ist, die Rate, mit der die Menge elektrischer Leistung zunimmt, auf einen Wert einzustellen, der geringer ist als die erste Rate, wenn als ein Ergebnis der Vorhersage die Steuereinheit (300) bestimmt, dass der Randwert für die thermische Belastung geringer als der erste Wert ist.

3. System nach Anspruch 1, wobei
die Steuereinheit (300) konfiguriert ist, die Rate, mit der die Menge elektrischer Leistung zunimmt, auf eine Zunahmerate einzustellen, die mit einem Proportional-Integral-Regler auf der Grundlage des Randwerts für die thermische Belastung berechnet ist, wenn die Steuereinheit (300) bestimmt hat, dass der Randwert für die thermische Belastung geringer als der erste Wert ist.

4. Verfahren zum Steuern des Anfahrens eines Kombikraftwerks (100), das eine Gasturbine (120), einen Abhitzedampferzeuger (130), eine Dampfturbine und Generatoren enthält, wobei das Verfahren Folgendes umfasst:

Bestimmen (S510) eines Betriebszustands von einer oder mehreren Komponenten des Kombikraftwerks (100) unter Verwendung von Sensoren (200);
Bestimmen (S520) von einer oder mehreren einschränkenden Bedingungen, die das Einstellen eines Betriebswerts eines Betriebsparameters des Kombikraftwerks (100) auf der Grundlage der bestimmten Betriebszustände der Komponenten des Kombikraftwerks (100) einschränken, und
Einstellen (S530) des Betriebswerts der Betriebsparameter auf der Grundlage eines Ergebnisses des Bestimmens der einen oder mehreren einschränkenden Bedingungen,
wobei die eine oder die mehreren einschränkenden Bedingungen einen Randwert für die thermische Belastung eines Rotors einer Dampfturbine des Abhitzedampferzeugers (130) enthalten und der Betriebsparameter eine Rate umfasst, mit der eine Menge elektrischer Leistung, die durch die Gasturbine (120) produziert wird, zunimmt, wobei das Verfahren ferner Folgendes umfasst:

Durchführen einer Modellierung der Komponenten des Kombikraftwerks (100),
wobei das Bestimmen der einen oder mehreren einschränkenden Bedingungen das Bestimmen umfasst, ob der Randwert für die thermische Belastung ein erster Wert ist oder darüber liegt oder nicht, und
wobei das Einstellen des Betriebswerts der Betriebsparameter das Einstellen einer Rate, mit der eine Menge elektrischer Leistung zunimmt, auf eine erste Zunahmerate umfasst, wenn bestimmt wird, dass der Randwert für die thermische Belastung der erste Wert ist oder darüber liegt.

5. Verfahren zum Steuern des Anfahrens eines Kombikraftwerks nach Anspruch 4, wobei:
das Einstellen des Betriebswerts des Betriebsparameters ferner das Einstellen der Rate, mit der die Menge elektrischer Leistung zunimmt, umfasst, geringer als der erste Wert zu sein, wenn der Randwert für die thermische Belastung geringer als der erste Wert ist.

6. Verfahren zum Steuern des Anfahrens eines Kombikraftwerks nach Anspruch 4, wobei:
das Einstellen des Betriebswerts des Betriebsparameters ferner das Einstellen der Rate, mit der die Menge elektrischer Leistung zunimmt, auf eine Zunahmerate umfasst, die mit einem Proportional-Integral-Regler auf der Grundlage des Randwerts für die thermische Belastung berechnet wird, wenn der Randwert für die thermische Belastung geringer als der erste Wert ist.

**Revendications**

1. Système pour commander un démarrage d'une centrale électrique à cycle combiné (100) qui inclut une turbine à gaz (120) et un générateur de vapeur à récupération de chaleur (130), le système comportant :

un ou plusieurs capteurs (200) configurés pour mesurer respectivement un état de fonctionnement d'un composant de la centrale électrique à cycle combiné (100) ; et
une commande (300) configurée pour commander le démarrage de la centrale électrique à cycle combiné (100) sur la base de l'état de fonctionnement du composant de la centrale électrique à cycle combiné (100) respectivement mesuré par le ou les capteurs (200), dans lequel
la commande (300) est configurée pour déterminer une ou plusieurs conditions restrictives qui restreignent le réglage d'une valeur opérationnelle de la centrale électrique à cycle combiné (100) sur la base de l'état de fonctionnement du composant de la centrale électrique à cycle combiné (100) respectivement mesuré par le ou les capteurs (200), et
la commande (300) est configurée pour régler la valeur opérationnelle du paramètre opérationnel sur la base d'un résultat de la détermination,

dans lequel la ou les conditions restrictives incluent une marge de contrainte thermique d'un rotor d'une turbine à vapeur du générateur de vapeur à récupération de chaleur (130) et le paramètre opérationnel inclut une vitesse à laquelle une quantité d'énergie électrique qui est produite par la turbine à gaz (120) augmente, la commande (300) est configurée pour réaliser une modélisation de composants de la centrale électrique à cycle combiné (100) et prédire si oui ou non la marge de contrainte thermique est égale à une première valeur ou est supérieure à celle-ci, et

dans lequel la commande (300) est configurée pour régler la vitesse à laquelle la quantité d'énergie électrique augmente pour être une première vitesse d'augmentation lorsque la marge de contrainte thermique du rotor de la turbine à vapeur est égale à la première valeur ou est supérieure à celle-ci.

2. Système selon la revendication 1, dans lequel
la commande (300) est configurée pour régler la valeur à laquelle la quantité d'énergie électrique augmente pour avoir une valeur qui est inférieure à la première vitesse lorsque, en résultat de la prédiction, la commande (300) détermine que la marge de contrainte thermique est inférieure à la première valeur.

3. Système selon la revendication 1, dans lequel
la commande (300) est configurée pour régler la valeur à laquelle la quantité d'énergie électrique augmente pour être une vitesse d'augmentation calculée avec une commande à action proportionnelle-intégrale sur la base de la marge de contrainte thermique lorsque la commande (300) a déterminé que la marge de contrainte thermique est inférieure à la première valeur.

4. Procédé de commande d'un démarrage d'une centrale électrique à cycle combiné (100) qui inclut une turbine à gaz (120), un générateur de vapeur à récupération de chaleur (130), une turbine à vapeur et des générateurs, le procédé comportant les étapes consistant à :

déterminer (S510) un état de fonctionnement d'un ou plusieurs composants de la centrale électrique à cycle combiné (100) en utilisant des capteurs (200) ;
déterminer (S520) une ou plusieurs conditions restrictives qui restreignent le réglage d'une valeur opérationnelle d'un paramètre opérationnel de la centrale électrique à cycle combiné (100) sur la base des états de fonctionnement déterminés des composants de la centrale électrique à cycle combiné (100) ; et
régler (S530) la valeur opérationnelle du paramètre opérationnel sur la base d'un résultat de la détermination de la ou des conditions restrictives,
dans lequel la ou les conditions restrictives incluent une marge de contrainte thermique d'un rotor d'une turbine à vapeur du générateur de vapeur à récupération de chaleur (130) et le paramètre opérationnel inclut une vitesse à laquelle une quantité d'énergie électrique qui est produite par la turbine à gaz (120) augmente,
dans lequel le procédé comporte en outre les étapes consistant à :

réaliser une modélisation des composants de la centrale électrique à cycle combiné (100),
dans lequel la détermination de la ou des conditions restrictives inclut la détermination de si la marge de contrainte thermique est égale ou non à une première valeur ou est supérieure à celle-ci, et
dans lequel le réglage de la valeur opérationnelle du paramètre opérationnel inclut le réglage d'une vitesse à laquelle une quantité d'énergie électrique augmente pour être égale à une première vitesse d'augmentation lorsqu'il est déterminé que la marge de contrainte thermique est égale à la première valeur ou est supérieure à celle-ci.

5. Procédé de commande d'un démarrage d'une centrale électrique à cycle combiné selon la revendication 4, dans lequel :
le réglage de la valeur opérationnelle du paramètre opérationnel inclut en outre le réglage de la vitesse à laquelle la quantité d'énergie électrique augmente pour être inférieure à la première valeur lorsque la marge de contrainte thermique est inférieure à la première valeur.

6. Procédé de commande d'un démarrage d'une centrale électrique à cycle combiné selon la revendication 4, dans lequel :
le réglage de la valeur opérationnelle du paramètre opérationnel inclut en outre le réglage de la vitesse à laquelle la quantité d'énergie électrique augmente pour être une vitesse d'augmentation calculée avec une commande à action proportionnelle-intégrale sur la base de la marge de contrainte thermique lorsque la marge de contrainte thermique est inférieure à la première valeur.

[FIG. 1]

[FIG. 2]

START

ACQUIRE OPERATING DATA OF COMPONENT USING SENSOR — S510

VERIFY RESTRICTIVE CONDITION BASED ON ACQUIRED OPERATING DATA — S520

SET OPERATIONAL PARAMETER ACCORDING TO RESULT OF VERIFICATION — S530

END

[FIG. 3]

```
                              ╭─────────────╮
                              │    START    │
                              ╰──────┬──────╯
                                     │
                                     ▼
                    ┌────────────────────────────────┐
                    │ ACQUIRE TEMPERATURE OF ROTOR OF │ ──S610
                    │ STEAM TURBINE AND TEMPERATURE OF│
                    │      STEAM USING SENSOR         │
                    └────────────────┬───────────────┘
                                     │
                                     ▼
                    ┌────────────────────────────────┐
                    │ CALCULATE THERMAL STRESS MARGIN │ ──S620
                    │      BASED ON ACQUIRED DATA     │
                    └────────────────┬───────────────┘
                                     │
                                     ▼
         YES            ╱────────────────────────────╲          NO
      ┌─────────────────  THERMAL STRESS MARGIN > SETTING ─────────────┐
      │                 ╲          VALUE              ╱                 │
      │                   ╲────────────────────────╱  S630             │
      │                                                                │
      ▼                                                                ▼
┌──────────────────────────────────────┐      ┌──────────────────────────────────────────┐
│ u(t)=min{u(t-1)+rmax×Ts,umax}         │      │ u(t)=min{u(t-1)+0.5×rmax×Ts,umax}          │
└──────────────────┬───────────────────┘      └────────────────────┬─────────────────────┘
                   │                                                 │
                 S640                                              S650
                   │                                                 │
                   └──────────────────┬──────────────────────────────┘
                                      ▼
                           ╭─────────────────────╮
                           │  WAITING UNTIL NEXT  │
                           │   SAMPLING PERIOD    │
                           ╰─────────────────────╯
```

52 MINUTES

670

HOURS (MINUTES)

[FIG. 4A]:  AMOUNT OF ELECTRIC POWER THAT IS
PRODUCED

660

HOURS (MINUTES)

[FIG. 4B]:  THERMAL STRESS MARGIN

[FIG. 5]

```
                        ┌─────────────┐
                        │    START    │
                        └──────┬──────┘
                               │
                               ▼
        ┌──────────────────────────────────────┐
        │ CONFIGURE MODEL PREDICTIVE CONTROL    │      S710
        │ BASED ON  RESULT OF MODELING OF       │
        │ COMPONENT                             │
        └──────────────────┬───────────────────┘
                           │
                           ▼
        ┌──────────────────────────────────────┐
        │ ACQUIRE TEMPERATURE OF ROTOR OF STEAM │      S720
        │ TURBINE AND TEMPERATURE OF STEAM USING│
        │ SENSOR                                │
        └──────────────────┬───────────────────┘
                           │
                           ▼
        ┌──────────────────────────────────────┐
        │ VERIFY WHETHER OR NOT THERMAL STRESS  │      S730
        │ MARGIN IS SUFFICIENT, BASED ON MODEL  │
        │ PREDICTIVE CONTROL                    │
        └──────────────────┬───────────────────┘
                           │
                           ▼
   YES  ╱───────────────────────────────────────╲  NO
  ┌─────     IS THERMAL STRESS MARGIN             ─────┐
  │     ╲        SUFFICIENT?                      ╱     │
  │      ╲─────────────────────────────────────╱       │
  ▼                                                     ▼
```

$u(t)=\min\{u(t-1)+r_{max} \times T_s, u_{max}\}$        $u(t)=\min\{u(t-1)+0.5 \times r_{max} \times T_s, u_{max}\}$

S740                                                          S750

```
                        ┌─────────────────┐
                        │ WAITING UNIT NEXT│
                        │ SAMPLING PERIOD  │
                        └─────────────────┘
```

[FIG. 6]

```
                          ┌─────────────┐
                          │    START    │
                          └──────┬──────┘
                                 │
                                 ▼
        ┌───────────────────────────────────────────┐
        │ ACQUIRE  TEMPERATURE  OF  ROTOR  OF  STEAM │──── S810
        │ TURBINE  AND  TEMPERATURE  OF  STEAM  USING│
        │ SENSOR                                     │
        └───────────────────────┬───────────────────┘
                                 │
                                 ▼
        ┌───────────────────────────────────────────┐
        │ CALCULATE  THERMAL  STRESS  MARGIN  BASED  │──── S820
        │ ON  ACQUIRED  DATA                         │
        └───────────────────────┬───────────────────┘
                                 │
                                 ▼
 YES          ╱────────────────────────────────────╲          NO
 ◄────────────┤  THERMAL  STRESS  MARGIN > SETTING  ├────────────►
              ╲              VALUE                  ╱
               ╲────────────────────────────────────╱
                                              S830
        │                                              │
        ▼                                              ▼
┌─────────────────────────────┐     ┌─────────────────────────────────────┐
│ u(t)=min{u(t-1)+rmax×Ts,umax}│     │ u(t)=u(t-1) +                       │
│                             │     │ max{0,min{K(y(t-1)-β),rmax} x Ts}   │
└──────────────┬──────────────┘     └──────────────────┬──────────────────┘
        S840   │                                        │   S850
               └───────────────┬────────────────────────┘
                               ▼
                   ┌───────────────────────────┐
                   │ WAITING UNIT NEXT SAMPLING │
                   │ PERIOD                     │
                   └───────────────────────────┘
```

[FIG. 7]

START

CONFIGURE MODEL PREDICTIVE CONTROL BASED ON RESULT OF MODELING OF COMPONENT — S910

ACQUIRE TEMPERATURE OF ROTOR OF STEAM TURBINE AND TEMPERATURE OF STEAM USING SENSOR — S920

VERIFY WHETHER OR NOT THERMAL STRESS MARGIN IS SUFFICIENT, BASED ON MODEL PREDICTIVE CONTROL — S930

IS THERMAL STRESS MARGIN SUFFICIENT?

YES

NO

$u(t)=\min\{u(t-1)+r\max \times Ts, u\max\}$

S940

$u(t)=u(t-1) + \max\{0, \min\{K(y(t-1)-\beta), r\max\} \times Ts\}$

S950

WAITING UNIT NEXT SAMPLING PERIOD

[FIG. 8]

[FIG. 8A]: AMOUNT OF ELECTRIC POWER
THAT IS PRODUCED

[FIG. 8B]: THERMAL STRESS MARGIN

**REFERENCES CITED IN THE DESCRIPTION**

**Patent documents cited in the description**

- JP 2004116416 A
- JP H09317404 A
- US 2014373540 A1

- EP 2792856 A2
- JP 2012057585 A